# EUROPÄISCHE PATENTANMELDUNG

(11) **EP 2 039 951 A2**
(43) Veröffentlichungstag der Anmeldung: **25.03.2009**
(21) Anmeldenummer: 08163385.1
(22) Anmeldetag: 01.09.2008
(51) Int. Cl.: F16D 13/64

(54) **Verfahren zum Herstellen einer Verbindung zwischen einer Kupplungsscheibe und einem Reibbelag und Kupplungsscheibe**

(30) Priorität: 13.09.2007 DE 102007043611; 04.08.2008 DE 102008040962
(71) Anmelder: ZF Friedrichshafen AG, 88038 Friedrichshafen (DE)
(72) Erfinder: Wickel, Christian, 97797, Wartmannsroth (DE)

(57) **Zusammenfassung**

Die Erfindung betrifft ein Verfahren zum Herstellen einer Verbindung zwischen einer Kupplungsscheibe (1), insbesondere einer Kraftfahrzeug-Reibungskupplung, und einem auf der Kupplungsscheibe (1) anzubringenden Reibbelag (2), wobei vor dem Zusammenfügen der beiden Teile Kupplungsscheibe (1) und Reibbelag (2) ein Klebstoff (3) auf mindestens eines der beiden Teile (1, 2) aufgebracht wird und wobei der Klebstoff (3) so auf die Oberfläche mindestens eines der beiden Teile (1, 2) aufgebracht wird, dass er nur einen Teil der einander zugewandten Oberflächen von Kupplungsscheibe (1) und Reibbelag (3) bedeckt. Um einen verbesserten Halt des Reibbelags auf der Kupplungsscheibe bei ökonomischem Einsatz des Klebstoffs zu erhalten, sieht die Erfindung vor, dass der Klebstoff (3) so auf mindestens eines der beiden Teile (1, 2) aufgebracht wird, dass seine Masse mindestens einen geschlossenen Kurvenzug, insbesondere in Form von Rauten, bildet. Des Weiteren betrifft die Erfindung eine Kupplungsscheibe.

## Beschreibung

Die Erfindung betrifft ein Verfahren zum Herstellen einer Verbindung zwischen einer Kupplungsscheibe, insbesondere einer Kraftfahrzeug-Reibungskupplung, und einem auf der Kupplungsscheibe anzubringenden Reibbelag, wobei vor dem Zusammenfügen der beiden Teile Kupplungsscheibe und Reibbelag ein Klebstoff auf mindestens eines der beiden Teile aufgebracht wird und wobei der Klebstoff so auf die Oberfläche mindestens eines der beiden Teile aufgebracht wird, dass er nur einen Teil der einander zugewandten Oberflächen von Kupplungsscheibe und Reibbelag bedeckt. Des Weiteren betrifft die Erfindung eine Kupplungsscheibe.

Es ist als eine der Möglichkeiten im Stand der Technik bekannt, Reibbeläge an Kupplungsscheiben mittels einer Klebeverbindung zu fixieren. Die Reibbeläge werden hiernach also auf dem Kupplungsscheibenkörper aufgeklebt. Derartige Lösungen sind beispielsweise in der DE 31 45 054 A1, in der DE 100 15 206 A1 und in der EP 0 342 865 A1 beschrieben.

Es hat sich dabei herausgestellt, dass ein vollflächiges Verkleben von Kupplungsscheibe und Reibbelag nicht erforderlich ist, um einen hinreichenden Halt des Reibbelags auf der Kupplungsscheibe zu erhalten. Daher ist es auch bekannt geworden, Verfahren der eingangs genannten Art einzusetzen, wonach der Klebstoff nur einen Teil der einander zugewandten Oberflächen von Kupplungsscheibe und Reibbelag bedeckt.

In der WO 98/44272 ist beschrieben, dass der Klebstoff strichförmig vor dem Fügen der Teile aufgebracht wird, d. h. er wird in Form einer Vielzahl parallel verlaufender Linien aufgetragen. Eine ähnliche Lösung zeigt die US 5,810,969.

Aus der EP 0 442 539 A2 ist es bekannt, den Klebstoff in der Form aufzubringen, dass er als Klebstoffraupe (d. h. mit kreisförmigem, halbkreisförmigem bzw. ovalem Querschnitt) entlang einer Spirale zwischen den zu verbindenden Teilen aufgebracht wird.

Da beim Ankleben von Reibbelägen der gegenständlichen Art zumeist lösungsmittelhaltige Klebstoffe eingesetzt werden, die umweltschädlich sind, ist es vorteilhaft, eine vollflächige Verklebung zu vermeiden, zumal die Klebeverbindung bei vollflächiger Verklebung zumeist überdimensioniert ist, d. h. es wird kaum beobachtet, dass Bauteilversagen deshalb eintritt, weil sich die Klebverbindung zwischen der Kupplungsscheibe und dem Reibbelag löst.

Die erläuterte nur teilflächige Verklebung der vorbekannten Art hat jedoch den Nachteil, dass die Klebeverbindung den Kraftfluss zwischen Kupplungsscheibe und Reibbelag nicht immer optimal überträgt. Bei der Rotation der Kupplungsscheibe entstehen durch die Fliehkräfte tangentiale Spannungen in der Kupplungsscheibe bzw. im Reibbelag, die durch den vorbekannten linienförmigen oder spiralförmigen Auftrag der Klebstoffraupe nicht immer optimal aufgenommen werden können.

Nachteilig ist weiterhin, dass bei den vorbekannten Lösungen die Angriffsfläche für Medien relativ groß ist, die zerstörerisch auf die Klebeverbindung wirken können. Im Falle eines linienförmigen Auftrags - dasselbe gilt für einen spiralförmigen Auftrag - des Klebstoffs kann z. B. Feuchtigkeit über eine relativ große Erstreckung auf die einzelnen Klebstoffraupen wirken und so gegebenenfalls eine Schwächung der Klebverbindung bewirken.

Der Erfindung liegt daher die **Aufgabe** zugrunde, ein Verfahren der eingangs genannten Art sowie eine Kupplungsscheibe so weiterzubilden, dass bei Beibehaltung einer nicht vollflächigen Verklebung eine verbesserte Übertragung der Spannungen zwischen Kupplungsscheibe und Reibbelag möglich ist. Ferner soll erreicht werden, dass die Klebeverbindung besser vor einer zerstörerischen Wirkung insbesondere von Feuchtigkeit geschützt ist.

Die **Lösung** dieser Aufgabe durch die Erfindung ist verfahrensgemäß **dadurch gekennzeichnet, dass** der Klebstoff so auf mindestens eines der beiden zu verbindenden Teile (Kupplungsscheibe und Reibbelag) aufgebracht wird, dass seine Masse mindestens einen geschlossenen Kurvenzug bildet.

Bevorzugt bildet der Klebstoff dabei eine Vielzahl geschlossener Kurvenzüge. Zumindest ein Teil der geschlossenen Kurvenzüge kann aneinander angrenzen.

Der Klebstoff ist bevorzugt in Form mindestens eines Vierecks aufgebracht, wobei eine besonders bevorzugte Ausführungsform vorsieht, dass der Klebstoff in Form mindestens einer Raute aufgebracht wird. Der spitze Winkel der Raute beträgt in diesem Falle bevorzugt zwischen 25° und 55°.

Der Klebstoff kann mit einer Klebeauftragwalze auf mindestens eines der Teile Kupplungsscheibe oder Reibbelag aufgebracht werden. Er kann dabei in Form von Raupen auf der Oberfläche mindestens einer der Teile Kupplungsscheibe und Reibbelag aufgebracht werden. Die Klebstoffraupe ist in diesem Falle bevorzugt vor dem Zusammenfügen der Teile im Querschnitt kreisförmig, halbkreisförmig oder oval.

Die Höhe der Klebstoffraupe ist mit Vorteil ausreichend, um Unebenheiten und Rauhigkeiten zwischen den beiden Teilen Kupplungsscheibe und Reibbelag ausgleichen zu können.

Der Klebstoff ist in fertigungstechnisch vorteilhafter Weise über die gesamte Kontaktfläche zwischen Kupplungsscheibe und Reibbelag in gleicher Orientierung aufgebracht.

Die vorgeschlagene Kupplungsscheibe, auf der mittels eines Klebstoffs mindestens ein Reibbelag befestigt ist, wobei der Klebstoff nur einen Teil der einander zugewandten Oberflächen von Kupplungsscheibe und Reibbelag bedeckt, sieht erfindungsgemäß vor, dass der Klebstoff zwischen den beiden Teilen Kupplungsscheibe und Reibbelag als mindestens ein geschlossener Kurvenzug vorliegt.

Der Klebstoff liegt dabei bevorzugt in Form einer Vielzahl aneinander grenzender Rauten vor. Der spitze Winkel der Raute liegt bevorzugt - wie oben erwähnt - zwischen 25° und 55°. Der Klebstoff liegt vorzugsweise über die gesamte Kontaktfläche zwischen Kupplungsscheibe und Reibbelag in gleicher Orientierung vor.

Mit der vorgeschlagenen Vorgehensweise ist eine feste Klebverbindung zwischen dem Reibbelag und der Kupplungsscheibe gegeben, wobei dennoch ein sehr ökonomischer Einsatz des Klebstoffs ermöglicht wird. Durch die erfindungsgemäße Ausgestaltung ist die mögliche Angriffsfläche von Feuchtigkeit sehr beschränkt, weshalb die Klebverbindung gut vor äußeren zerstörerischen Einflüssen geschützt ist.

Die in der Kupplungsscheibe und im Reibbelag entstehenden tangentialen Spannungen können auch dann besser aufgenommen werden, wenn das vorgeschlagene Muster der Klebstoffraupen in fertigungstechnisch einfacher Weise mit gleicher Orientierung über die gesamte Kontaktfläche von Kupplungsscheibe und Reibbelag aufgetragen wird.

In der Zeichnung ist ein Ausführungsbeispiel der Erfindung dargestellt. Es zeigen:
- Fig. 1: eine Kupplungsscheibe samt Reibbelag im Radialschnitt, wobei die beiden Teile noch nicht gefügt sind,
- Fig. 2: die Kupplungsscheibe in der Seitenansicht mit angedeuteten Reibbelägen und der schematischen Darstellung des aufgebrachten Klebstoffmusters,
- Fig. 3: eine vergrößerte Darstellung der Oberfläche der Kupplungsscheibe mit aufgebrachtem Klebstoff,
- Fig. 4: den Schnitt A-B gemäß Fig. 3 durch die Klebstoffraupe gemäß einer ersten Ausgestaltung und
- Fig. 5: den Schnitt A-B gemäß Fig. 3 durch die Klebstoffraupe gemäß einer alternativen Ausgestaltung.

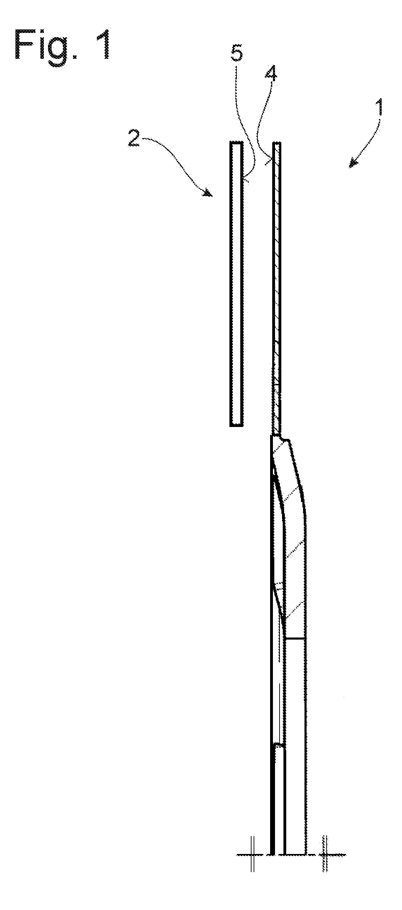

In Fig. 1 ist eine Kupplungsscheibe 1 im Radialschnitt zu sehen, auf die im radial äußeren Bereich eine Anzahl von Reibbelägen 2 aufgeklebt werden soll. Nachdem mindestens eine der Oberfläche 4 der Kupplungsscheibe 1 oder 5 des Reibbelags 2 mit Klebstoff versehen ist, werden die in Fig. 1 noch separierten Teile 1, 2 durch Zusammenpressen in axiale Richtung der Kupplungsscheibe gefügt. Vorzugsweise wird der Klebstoff auf die Kupplungsscheibe 1 aufgetragen und dann der Reibbelag 2 angepresst.

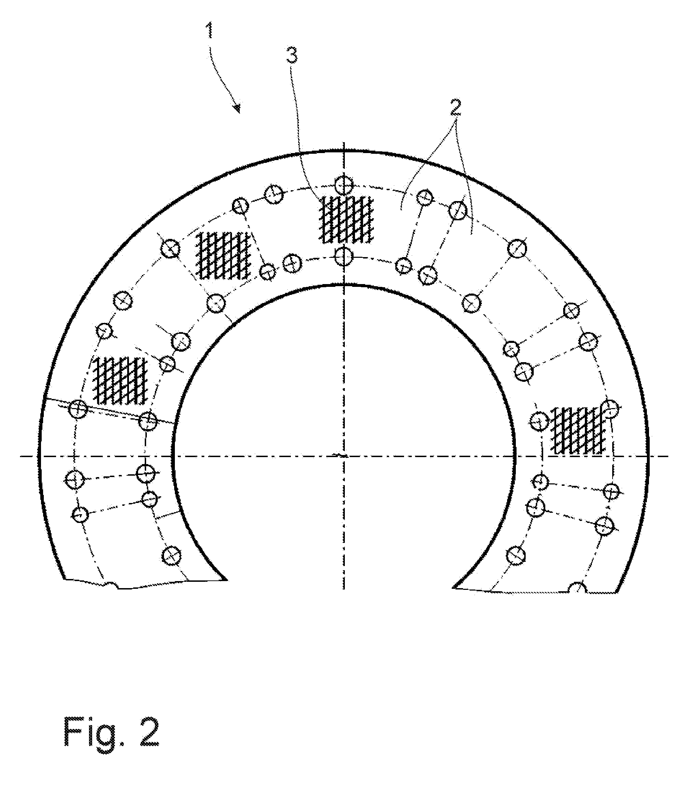

In Fig. 2 ist dargestellt, dass Klebstoff 3 auf die Oberfläche der Kupplungsscheibe 1 aufgebracht ist. Dies erfolgt nicht vollflächig, sondern in der Weise, dass der Klebstoff als Klebstoffraupe gemäß einem vorgegebenen Muster auf die Bauteiloberfläche aufgetragen wird.

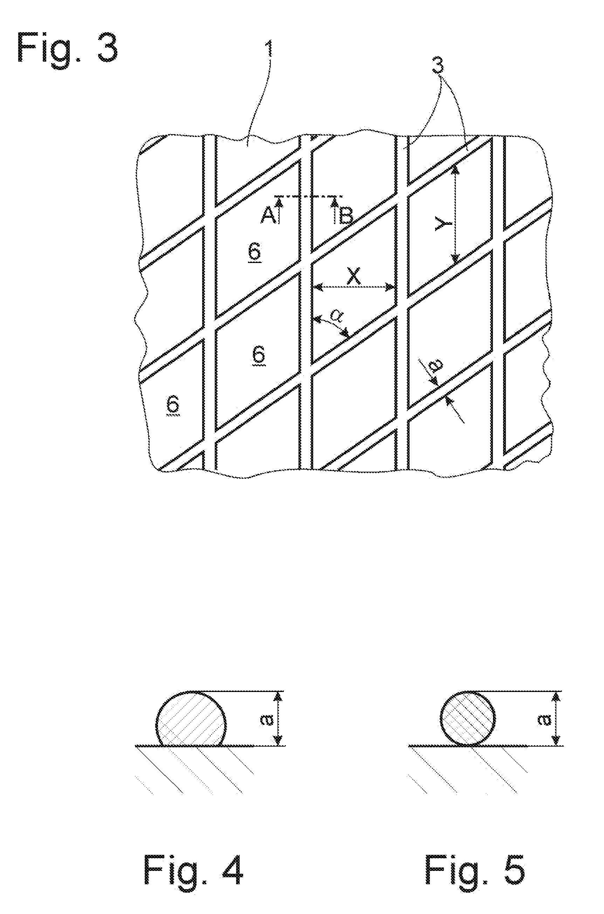

Dies ist etwas detaillierter in den Figuren 3 bis 5 zu sehen. Hier ist erkennbar, dass der Klebstoff 3 so auf die Oberfläche der Kupplungsscheibe aufgebracht wurde, dass seine Masse einen geschlossenen Kurvenzug bildet. Vorliegend ist gemäß einer bevorzugten Ausführungsform der Erfindung vorgesehen, dass der Klebstoff 3 in Form eines Rautenmusters aufgetragen wurde. Die dabei mögliche Klebstoffform nach dem Aufbringen des Klebstoffs 3 und vor dem Fügen der Kupplungsscheibe 1 mit dem Reibbelags 2 ist den Querschnitten zu entnehmen, die in den Figuren 4 und 5 dargestellt sind. Danach ist der Klebstoff 3 als Klebstoffraupe aufgebracht, die im Querschnitt eine kreisförmige, ovale oder halbkreisförmige Ausbildung hat, wobei dies auch von der Viskosität des Klebstoffs 3 abhängig ist.

Ein bevorzugtes Auftragsverfahren ist das Aufbringen des Klebstoffs mittels einer Klebeauftragswalze. Dabei hat die Walze eine Oberflächentopographie, die dem Muster entspricht, wie der Klebstoff auf die Oberfläche der Kupplungsscheibe aufgebracht werden soll. Nach dem Benetzen der Walzenoberfläche mit Klebstoff wird dieser auf die Oberfläche der Kupplungsscheibe durch Abwalzen aufgebracht bzw. übertragen. Dabei ergibt sich das gewünschte Muster des Klebstoffs auf der Oberfläche des Bauteils 1, wobei sich dazwischen Klebstoff-freie Flächen 6 befinden (s. Fig. 3).

Die bevorzugte Ausgestaltung der Erfindung ist die Anordnung des Klebstoffs 3 in Form eines Rautenmusters. Bei diesem kreuzgerillen Muster sind parallele Linien Klebstoffmaterial aufgetragen, die sich unter einem spitzen Winkel α (s. Fig. 3) kreuzen.

Die parallele Linien befinden sich in einem Abstand X bzw. Y, die Dicke a der Klebstoffraupe nach dem Auftragen des Klebstoffs und vor dem Fügen der Bauteile 1, 2 ist ebenfalls illustriert. Man kann sagen, dass eine gleichmäßige Dicke a aller Klebstoffraupen angestrebt wird, wobei die Abstände X und Y bevorzugt das 5-fache bis 20-fache der Dicke a betragen.

Als Größe für den spitzen Winkel α der Raute hat sich ein Wertebereich zwischen 35° bis 45° besonders bewährt. Dies kann in besonders einfacher Weise mit einer Klebeauftragwalze realisiert werden. Die Aufnahme von Spannungen durch die Klebstoffverbindung ist dabei bei einem Winkel von 45° optimal.

Für den Auftrag des Klebstoffs 3 auf der Kupplungsscheibe 1 ist es vorteilhaft, wenn die Dicke der Klebstoffraupe a so gewählt wird, dass Unebenheiten und Rauhigkeiten der zu fügenden Teile 1, 2 ausgeglichen werden können.

Das bevorzugt vorgeschlagene Auftragsmuster in Form aneinandergrenzender Rauten ist fertigungstechnisch einfach aufzubringen. Von Vorteil ist es ferner, dass im Unterschied zu dem vorbekannten Längsrillenmuster der Kraftfluss mit dem erfindungsgemäßen Vorschlag günstiger ist. Durch das vorgeschlagene Rautenmuster ist sichergestellt, dass eine radiale Linie stets die Klebstoffraupe schneidet.

Ein weiterer Vorteil besteht darin, dass bei der gewählten Ausformung des Klebstoffs 3 die Berührlinie mit der Umgebung relativ klein ist. Klebeschädigungsmechanismen, wie z. B. Feuchte oder Korrosion, haben daher nur eine geringe Angriffsfläche, so dass der Angriff des Klebstoffs gering bleibt.

Durch die Fliehkräfte, die auf die Kupplungsscheibe 1 und auf den Reibbelag 2 bei Rotation der Kupplungsscheibe 1 wirken, entstehen tangentiale Spannungen in den Bauteilen. Diese werden am besten durch Klebstoffraupen abgefangen, die in gleicher Richtung verlaufen (s. Fig. 2). Das vorgeschlagene Rautenmuster ist diesbezüglich sehr viel günstiger als das vorbekannten linienförmige Auftragsmuster.

Eine Kontaktfläche zwischen dem Klebstoff und dem jeweiligen Bauteil Kupplungsscheibe 1 bzw. Reibbelag 2 von 15 % bis 30 % ist dabei völlig ausreichend, um einen zuverlässigen Halt des Reibbelags 2 auf der Kupplungsscheibe 1 sicherzustellen.

Der vorgeschlagene Prozess kann in relativ kurzer Zeit durchgeführt werden, so dass eine wirtschaftliche Fertigung möglich ist.

Mit der erfindungsgemäßen Vorgehensweise ist ein ökonomischer Einsatz von Klebstoff möglich, so dass eine kostengünstige und auch umweltschonende Fertigung möglich ist. Es wird weniger Lösungsmittel benötigt, so dass es leichter möglich ist, Umweltauflagen einzuhalten.

### Bezugszeichenliste

- 1: Kupplungsscheibe
- 2: Reibbelag
- 3: Klebstoff
- 4: Oberfläche der Kupplungsscheibe
- 5: Oberfläche des Reibbelags
- 6: Klebstoff-freie Fläche

- α: Winkel
- a: Raupendicke
- X: Abstand
- Y: Abstand

## Patentansprüche

1. Verfahren zum Herstellen einer Verbindung zwischen einer Kupplungsscheibe (1), insbesondere einer Kraftfahrzeug-Reibungskupplung, und einem auf der Kupplungsscheibe (1) anzubringenden Reibbelag (2), wobei vor dem Zusammenfügen der beiden Teile Kupplungsscheibe (1) und Reibbelag (2) ein Klebstoff (3) auf mindestens eines der beiden Teile (1, 2) aufgebracht wird und wobei der Klebstoff (3) so auf die Oberfläche mindestens eines der beiden Teile (1, 2) aufgebracht wird, dass er nur einen Teil der einander zugewandten Oberflächen von Kupplungsscheibe (1) und Reibbelag (3) bedeckt,
**dadurch gekennzeichnet,**
**dass** der Klebstoff (3) so auf mindestens eines der beiden Teile (1, 2) aufgebracht wird, dass seine Masse mindestens einen geschlossenen Kurvenzug bildet.

2. Verfahren nach Anspruch 1,
**dadurch gekennzeichnet,**
**dass** der Klebstoff (3) eine Vielzahl geschlossener Kurvenzüge bildet.

3. Verfahren nach Anspruch 2,
**dadurch gekennzeichnet,**
**dass** zumindest ein Teil der geschlossenen Kurvenzüge aneinander angrenzt.

4. Verfahren nach einem der Ansprüche 1 bis 3,
**dadurch gekennzeichnet,**
**dass** der Klebstoff (3) in Form mindestens eines Vierecks aufgebracht wird.

5. Verfahren nach Anspruch 4,
**dadurch gekennzeichnet,**
**dass** der Klebstoff (3) in Form mindestens einer Raute aufgebracht wird.

6. Verfahren nach Anspruch 5,
**dadurch gekennzeichnet,**
**dass** der spitze Winkel (α) der Raute zwischen 25° und 55° liegt.

7. Verfahren nach einem der Ansprüche 1 bis 6,
**dadurch gekennzeichnet,**
**dass** der Klebstoff (3) mit einer Klebeauftragwalze auf mindestens eines der Teile Kupplungsscheibe (1) oder Reibbelag (2) aufgebracht wird.

8. Verfahren nach einem der Ansprüche 1 bis 7,
**dadurch gekennzeichnet,**
**dass** der Klebstoff (3) in Form von Raupen auf der Oberfläche mindestens einer der Teile Kupplungsscheibe (1) und Reibbelag (2) aufgebracht wird.

9. Verfahren nach Anspruch 8,
**dadurch gekennzeichnet,**
**dass** die Klebstoffraupe vor dem Zusammenfügen der Teile (1, 2) im Querschnitt kreisförmig, halbkreisförmig oder oval vorliegt.

10. Verfahren nach Anspruch 8 oder 9,
**dadurch gekennzeichnet,**
**dass** die Höhe der Klebstoffraupe ausreichend ist, um Unebenheiten und Rauhigkeiten zwischen den beiden Teilen Kupplungsscheibe (1) und Reibbelag (2) ausgleichen zu können.

11. Verfahren nach einem der Ansprüche 1 bis 10,
**dadurch gekennzeichnet,**
**dass** der Klebstoff (3) über die gesamte Kontaktfläche zwischen Kupplungsscheibe (1) und Reibbelag (2) in gleicher Orientierung aufgebracht wird.

12. Kupplungsscheibe (1), auf der mittels eines Klebstoffs (3) mindestens ein Reibbelag (2) befestigt ist, wobei der Klebstoff (3) nur einen Teil der einander zugewandten Oberflächen von Kupplungsscheibe (1) und Reibbelag (2) bedeckt,
**dadurch gekennzeichnet,**
**dass** der Klebstoff (3) zwischen den beiden Teilen Kupplungsscheibe (1) und Reibbelag (2) als mindestens ein geschlossener Kurvenzug vorliegt.

13. Kupplungsscheibe nach Anspruch 12,
**dadurch gekennzeichnet,**
**dass** der Klebstoff (3) in Form einer Vielzahl aneinander grenzender Rauten vorliegt.

14. Kupplungsscheibe nach Anspruch 13,
**dadurch gekennzeichnet,**
**dass** der spitze Winkel (α) der Raute zwischen 25° und 55° liegt.

15. Kupplungsscheibe nach einem der Ansprüche 12 bis 14,
**dadurch gekennzeichnet,**
**dass** der Klebstoff (3) über die gesamte Kontaktfläche zwischen Kupplungsscheibe (1) und Reibbelag (2) in gleicher Orientierung vorliegt.
